# DEMANDE DE BREVET EUROPEEN

(11) **EP 2 541 304 A2**
(43) Date de publication de la demande: **02.01.2013**
(21) Numéro de dépôt: 12447013.9
(22) Date de dépôt: 29.06.2012
(51) Int. Cl.: G02B 27/22

(54) **Stéréoscope par anamorphose oblique**

(30) Priorité: 01.07.2011 BE 201100405
(71) Demandeur: Roussel, Denis, 1190 Bruxelles (BE); Tassenoy, Denis, 1060 Bruxelles (BE)
(72) Inventeur: Roussel, Denis, 1190 Bruxelles (BE); Tassenoy, Denis, 1060 Bruxelles (BE)

(57) **Abrégé**

Le stéréoscope par anamorphose oblique est un dispositif de reproduction et de diffusion d'images en relief. Il se présente sous la forme d'une prisme isocèle dont les faces latérales sont imprimées avec les deux images d'une paire stéréoscopique, déformées par anamorphose oblique (fig.11). Ces anamorphoses sont calculées pour que d'un point de vue donné, elles restituent à la vue d'un observateur deux images apparentes distinctes - une différente pour chaque oeil - de dimensions identiques et parfaitement superposées l'une à l'autre.

## Description

### CONTEXTE

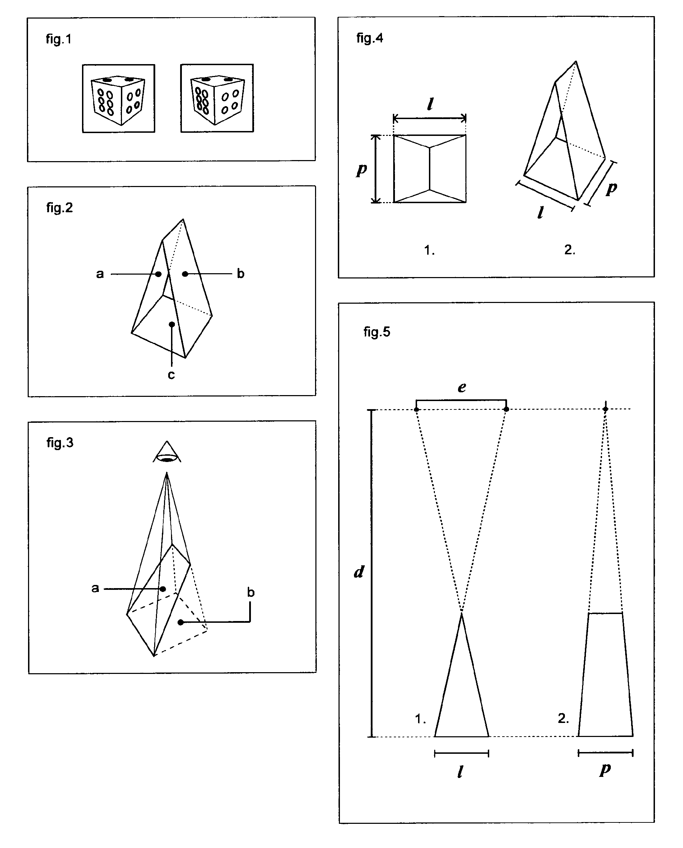

Une image en relief est généralement capturée en photographiant un même sujet à partir de deux points de vue légèrement décalés - comme c'est le cas dans la vision humaine. Ces deux images, appelées paire stéréoscopique, sont d'ordinaire présentées côte à côte, à plat. (fig.1)

Le principal problème posé par la stéréoscopie consiste ensuite à placer l'observateur dans des conditions telles que chaque oeil ne perçoive que l'image qui lui est destinée, et que ces deux images indépendamment perçues se superposent parfaitement. Chaque procédé se distingue par la technique proposée pour y parvenir.

Les solutions données jusqu'ici à ce problème présentent deux obstacles majeurs : soit elles nécessitent l'utilisation d'un matériel complémentaire (lunettes filtrantes, réseaux lenticulaires, appareil à prismes, à lentilles ou à miroirs), soit elles requièrent de l'observateur un effort oculaire souvent pénible et décourageant, voire impossible à produire (méthode consistant à croiser ou décroiser les yeux). Ces deux obstacles constituent un frein évident à la diffusion massive et à moindre coût d'images en relief.

L'invention décrite ici ne souffre d'aucune de ces deux contraintes et donne au problème une solution nouvelle, basée sur l'emploi de l'anamorphose oblique.

Elle présente en outre un avantage certain sur le stéréoscope décrit par le brevet GB 2 390 909 A (FISHEYE COMM LTD [GB]) (2004-01-21), qui lui aussi fait appel à l'anamorphose, mais présente l'inconvénient de générer deux images apparentes non superposées l'une à l'autre, obligeant l'utilisateur à croiser les yeux (ou "loucher") pour reconstituer l'image tridimentionnelle. De ce point de vue, ce brevet antérieur ne répond pas au principal problème posé par la stéréoscopie, tel que décrit ci-dessus (page 1, ligne 11).

### DESCRIPTION DE L'INVENTION

Le stéréoscope par anamorphose oblique (dénommé ici *obliscope*) est un procédé de reproduction et de diffusion d'images en relief n'exploitant que les techniques traditionnelles d'imprimerie.

L'obliscope se présente sous la forme d'un prisme isocèle - structure fixe ou à assembler par pliage - dont les faces latérales sont imprimées avec les deux images anamorphosées d'une paire stéréoscopique. (fig.2 - a. face latérale gauche - b. face latérale droite - c. base)

Lorsqu'une anamorphose oblique est appliquée à une image, celle-ci est déformée pour apparaître dans ses proportions initiales sous un angle donné et pour une distance donnée; l'image ainsi formée est appelée image apparente. (fig.3 **-** a. image réelle - b. image apparente) Le stéréoscope par anamorphose oblique exploite ce principe ; grâce à l'écartement des yeux de l'observateur, il est en effet possible de faire coexister deux anamorphoses - une pour chaque oeil - donnant deux images apparentes distinctes, mais de dimensions identiques et parfaitement superposées l'une à l'autre.

### CONSTRUCTION GÉOMÉTRIQUE

Pour construire un obliscope, on fixe préalablement les dimensions de la base, ***l*** - largeur et ***p*** - profondeur (fig.4 - 1. vue de haut - 2. vue en perspective).

Ces dimensions seront aussi celles des images de la paire stéréoscopique choisie, ainsi que celles de l'image en relief qui sera finalement perçue. On fixe également ***d*** - distance d'observation, mesurée entre le regard de l'observateur et la base. Enfin, on considère généralement ***e*** - écartement interpupillaire, comme ayant une valeur de 65mm. (fig.5 - 1. vue de face - 2. vue de profil)

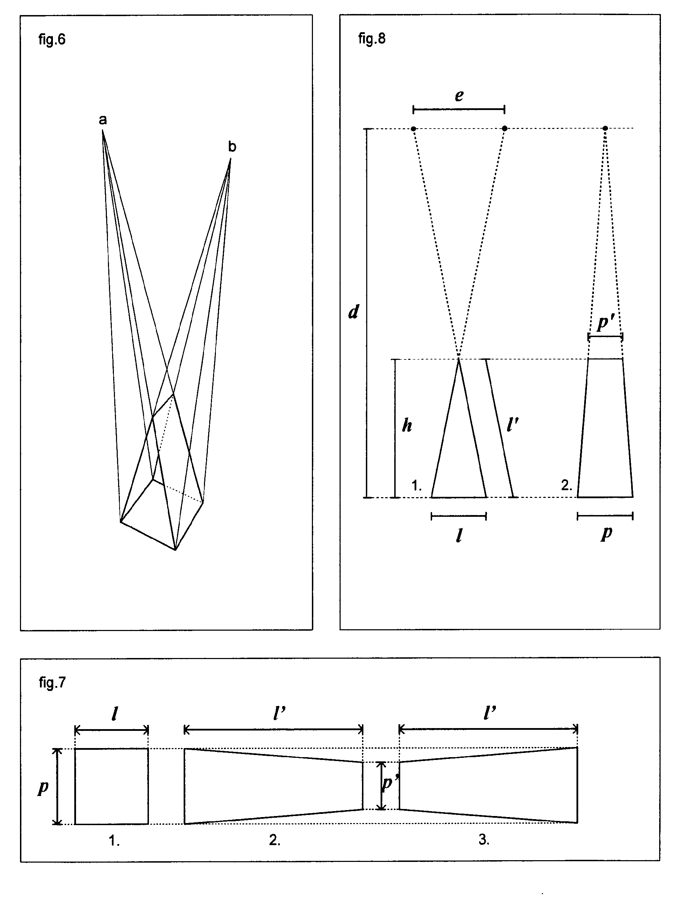

D'un point de vue géométrique, l'obliscope matérialise l'intersection des deux faisceaux pyramidaux joignant chaque oeil de l'observateur à la base. (fig.6 - a. oeil gauche - b. oeil droit)

Les trois éléments constituant l'obliscope sont : la base, rectangle de dimension ***lxp***, et les deux faces latérales, trapèzes isocèles dont la grande base vaut ***p,*** la petite base ***p*'** et la hauteur ***l*'.** (fig.7 -1. base - 2. face latérale gauche - 3. face latérale droite)

Les valeurs ***h, l'*** et ***p'*** peuvent être déterminées à partir des valeurs préalablement fixées. (fig.8-1. vue de face - 2. vue de profil) par les formules suivantes : ***h*=(*dxl*)/(*e*+*l*)**, ***l'=*(*h²*+(*l²*/4))^{-*2*}** et ***p'*=*p*x(*e*/(*e*+*l*)).**

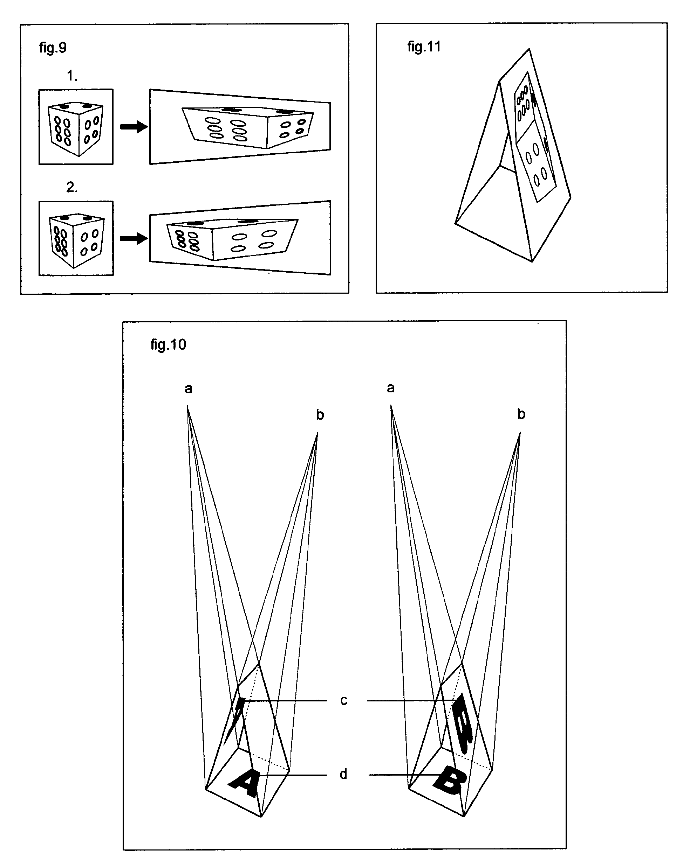

On anamorphose ensuite les deux images de la paire stéréoscopique selon les proportions des faces latérales correspondantes (fig.9 -1. image gauche - 2. image droite) Ces anamorphoses sont appliquées - ou directement imprimées - sur les faces correspondantes.

Une fois l'obliscope assemblé, l'observateur cherche la distance ***d*** d'où chacun de ses yeux percevra l'image qui lui est propre. L'image en relief se forme alors naturellement. (fig.10 - a. oeil gauche - b. oeil droit - c. images anamorphosées - d. images perçues par le cerveau)

### DIMENSIONS IDÉALES

Le choix initial des valeurs ***l, p*** et ***d*** est limité. De ce fait, le résultat final ne pourra s'écarter que faiblement des proportions de l'obliscope telle qu'il est représenté ici.

On peut noter les points suivants :

La profondeur ***p*** n'est limitée que par des critères esthétiques. Il est parfaitement possible de choisir une valeur ***p*** supérieure à ***l*** mais l'image représentée serait alors plus haute que large, soit dans un rapport inverse de ce qui est plus généralement utilisé en photographie (format paysage). C'est un choix esthétique et purement arbitraire que d'opter ici pour une base carrée **[*p* = *l*].**

Cependant, cette option présente l'avantage d'offrir une surface optimale à l'image en relief sans pour autant apparaître comme trop marginale. En effet, compte tenu de la limitation stricte de la largeur ***l,*** choisir un format type paysage **[*p*** < ***l*]** reviendrait à se priver d'une portion de la surface disponible comme le font les bandes noires en télévision, tandis qu'un format type portrait **[*p* > *l*]** serait fort peu adapté à la reproduction d'un grand nombre d'images. La base carrée [***p* = *l*]** optimise donc la surface disponible tout en présentant une esthétique neutre. Par ailleurs, l'idée de faire varier ces valeurs « à la carte » en fonction de l'image à présenter semble commercialement douteuse.

On cherchera idéalement à obtenir une image apparente la plus grande possible - autrement dit couvrant la plus grande surface du champ de vision. On peut obtenir une mesure de la largeur angulaire de l'image ***l_{ang}*** telle que perçue depuis la distance d'observation ***d*** par la formule ***l_{ang}* =2xASIN(*l*/(2xd)).**

On peut également mesurer la surface d'une face latérale de l'obliscope, bonne indicatrice de son coût de production et *in fine* de son encombrement, facteur essentiel à sa diffusion. Cette surface ***S*** peut se calculer par ***S*** = ½**((*p*+*p'*)x*l'*)** (voir p.2 ligne 21 pour le calcul de ***l'*** et ***p'***).

Enfin, il faut considérer que l'observateur devra pouvoir parfaitement focaliser son regard sur le point situé le plus près de ses yeux. Cette distance minimale ***dₘᵢₙ***, mesurée entre le point médian du regard (situé entre les deux yeux) et le sommet de l'obliscope ne devra jamais être inférieure à 150mm. On peut la contrôler par dmin = ***d-h*** (voir p.2 ligne 21 pour le calcul de ***h***).

Le choix de ***p*** étant lié à des critères esthétiques, le problème revient à opter pour un couple de valeurs [***l,d***] tel que la largeur angulaire ***l_{ang}*** soit maximale pour une surface latérale ***S*** minimale et une distance minimale ***dₘᵢₙ*** la plus courte possible, quoique jamais inférieure à 150mm.

Un couple de valeurs donnant d'excellents résultats sont [ ***l***=43mm, ***d***=250mm ] avec une surface latérale ***S*** = 31,5 cm² (calculée en considérant ***p*** = l), une distance minimale de focalisation ***dₘᵢₙ***= 150,5mm et une largeur angulaire ***l_{ang}***= 9,87°. A titre de comparaison, le couple de valeurs [ ***l*=** 40mm, ***d*=** 250mm ] offre des performances légèrement inférieures avec ***S*** = 31,5 cm² (identique), un faible gain sur ***dₘᵢₙ*** avec 154,8mm pour une perte substantielle de largeur angulaire avec ***l_{ang}*** 9.18°.

Il serait en théorie possible de déterminer le couple [ ***l,d*** ] optimal si on pouvait quantifier précisément les rapports entre les gains obtenus sur des données à la fois techniques, esthétiques et physiologiques. On est dès lors contraints de conjecturer que toutes les variantes inédites de l'obliscope présentant des qualités comparables au couple de valeurs [***l*=**43mm, ***d*=**250mm], afficheront des dimensions très voisines de celui-ci, et qu'on ne pourrait les déclarer meilleures que sur la base de critères subjectifs et difficilement quantifiables.

## Revendications

1. Dispositif destiné à présenter une image en relief sans aucun matériel optique additionnel, utilisant une paire d'images stéréoscopiques, déformées par anamorphose, et imprimées respectivement sur les deux faces latérales d'un prisme isocèle, ledit dispositif étant **caractérisé par le fait que** lesdites images anamorphosées sont imprimées sur la surface extérieure desdites faces latérales, et que les proportions dudit prisme sont calculées de telle sorte que, d'un point de vue donné et sous un angle d'observation approprié, lesdites images anamorphosées restituent à la vue de l'utilisateur deux images apparentes distinctes, soit une pour chaque oeil, lesdites images apparentes étant de dimensions identiques et parfaitement superposées l'une à l'autre.

2. Dispositif selon la revendication 1, **caractérisé en ce qu'il** est fait de papier carton, imprimé, découpé, et destiné à être assemblé par pliage.

3. Dispositif selon la revendication 2, **caractérisé en ce que** le papier carton est remplacé par un autre support imprimable.

4. Dispositif selon les revendications 2 et 3, **caractérisé en ce que** son pliage permet de le refermer sur lui même, pour le conserver à plat.

5. Dispositif selon les revendications 2 à 4, **caractérisé en ce qu'il** est destiné à prendre place sur un support lui donnant la forme et les propriétés voulues.

6. Dispositif selon la revendication 1, **caractérisé en ce qu'il** est obtenu par moulage, usinage ou impression en trois dimensions.

7. Dispositif selon toutes les revendications précédentes, **caractérisé en ce que** la base sur laquelle il repose est un rectangle dont la mesure des côtés est comprise entre 30mm et 60mm, et dont les faces latérales imprimées sont deux trapèzes identiques, dont les côtés parallèles ont une mesure comprise entre 30 et 60mm à la base et entre 18 et 60mm au sommet, et dont la hauteur est comprise entre 75 et 120mm.

8. Dispositif selon la revendication 7, **caractérisé en ce que** ladite base est un carré de 40mm de côté, **en ce que** lesdits côtés parallèles mesurent 40mm à la base et 25mm au sommet, et **en ce que** ladite hauteur mesure 97mm.
